# EUROPEAN PATENT APPLICATION

(11) **EP 4 343 418 A1**
(43) Date of publication of application: **27.03.2024**
(21) Application number: 22804630.6
(22) Date of filing: 16.05.2022
(51) Int. Cl.: G02F 1/155, G02C 7/10, G02F 1/15

(54) **ELECTROCHROMIC ELEMENT AND EYEGLASS LENS**

(30) Priority: 17.05.2021 JP 2021082863
(71) Applicant: Hoya Lens Thailand Ltd., Pathumthani 12130 (TH)
(72) Inventor: MIYAZAKI, Shigeki, Tokyo 160-8347 (JP); KAWAKAMI, Hironori, Tokyo 160-8347 (JP)
(74) Representative: Hoffmann Eitle
(86) International application number: PCT/JP2022/020347
(87) International publication number: WO 2022/244719

(57) **Abstract**

To provide an electrochromic element having an electrode layer without cracks and a lens for spectacles using the same. The electrochromic element of the present invention is an electrochromic element having an electrode layer and an electrochromic layer, and the electrode layer is preferably a transparent electrode layer made of an amorphous material.

## Description

### [Technical Field]

The present invention relates to an electrochromic element whose coloring and discoloring can be reversibly controlled by electricity and a lens for spectacles using the same.

### [Background Art]

Electrochromic elements that utilize an electrochromism phenomenon in which a voltage is applied to cause a reversible oxidation-reduction reaction and colors are reversibly changed are used as, for example, lenses for spectacles. An electrochromic element is formed with a laminated structure having an electrode layer and an electrochromic layer on the surface of a substrate.

### [Citation List]

### [Patent Literature]

[PTL 1] Japanese Patent Application Publication No. 2021-9368

### [Summary of Invention]

### [Technical Problem]

As described in PTL 1, a transparent electrode layer made of ITO or the like is generally used as the electrode layer. When an electrochromic (EC) element is incorporated into a lens for spectacles, in order to produce a prescription lens with a predetermined dioptic power, it is necessary to adjust the shape of the element so that a convex surface and a concave surface form a roughly spherical surface. Since it is difficult to produce a spherical element from the beginning, generally, a planar EC element is produced and then processed into a spherical shape.

However, there is a problem in which cracks occur in a transparent electrode made of ITO during spherical processing. Cracks inhibit functions of elements, and become a factor that reduces long-term reliability.

The present invention has been made in order to address the above problems, and an objective of the present invention is to provide an electrochromic element having an electrode layer that can minimize the occurrence of cracks and a lens for spectacles using the same.

### [Solution to Problem]

An electrochromic element in the present invention is an electrochromic element having an electrode layer and an electrochromic layer, and the electrode layer is a transparent electrode layer made of an amorphous material.

In the present invention, preferably, the electrode layer is a transparent electrode layer containing IZO.

In the present invention, preferably, the electrode layer is a transparent electrode layer containing a conductive polymer material.

An electrochromic element in the present invention is an electrochromic element having an electrode layer and an electrochromic layer, and the electrode layer contains conductive fibers.

In the present invention, preferably, the conductive fibers are carbon nanotubes or metal nanowires.

In the present invention, the electrode layer may have a configuration in which a transparent electrode layer contains the conductive fibers.

In the present invention, the electrochromic element can be formed into a curved shape.

A lens for spectacles in the present invention includes the electrochromic element according to any one of the above electrochromic elements.

### [Advantageous Effects of Invention]

According to the electrochromic element of the present invention and the lens for spectacles using the same, the occurrence of cracks can be minimized by improving the material of the electrode layer.

### [Brief Description of Drawings]

[Fig. 1]

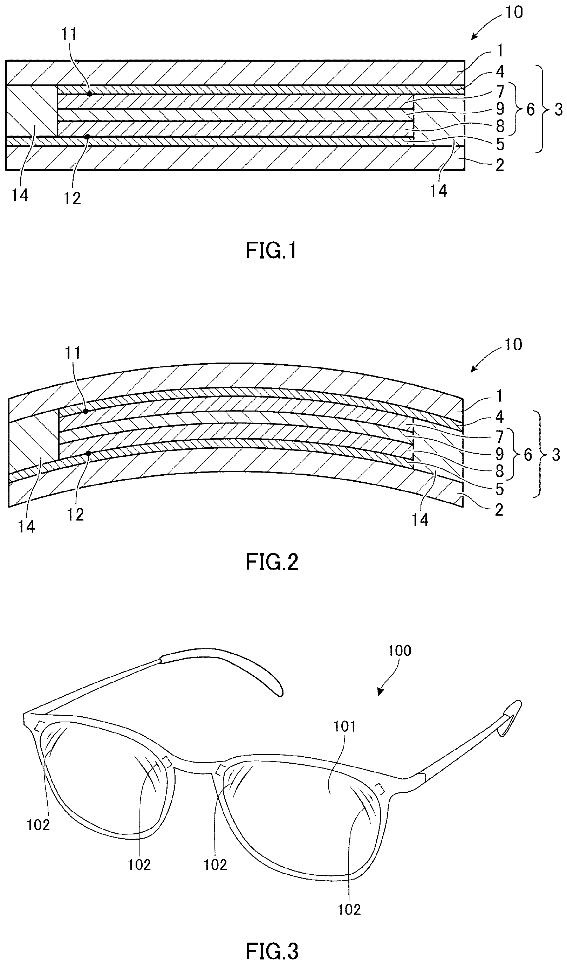

   Fig. 1 is a schematic cross-sectional view of an electrochromic element according to an embodiment of the present invention.
[Fig. 2]
   Fig. 2 is a schematic cross-sectional view showing a case in which the electrochromic element according to the embodiment of the present invention is processed into a spherical shape.
[Fig. 3]
   Fig. 3 is a perspective view showing cracks occurred in spectacles using a conventional electrochromic element.
[Fig. 4]

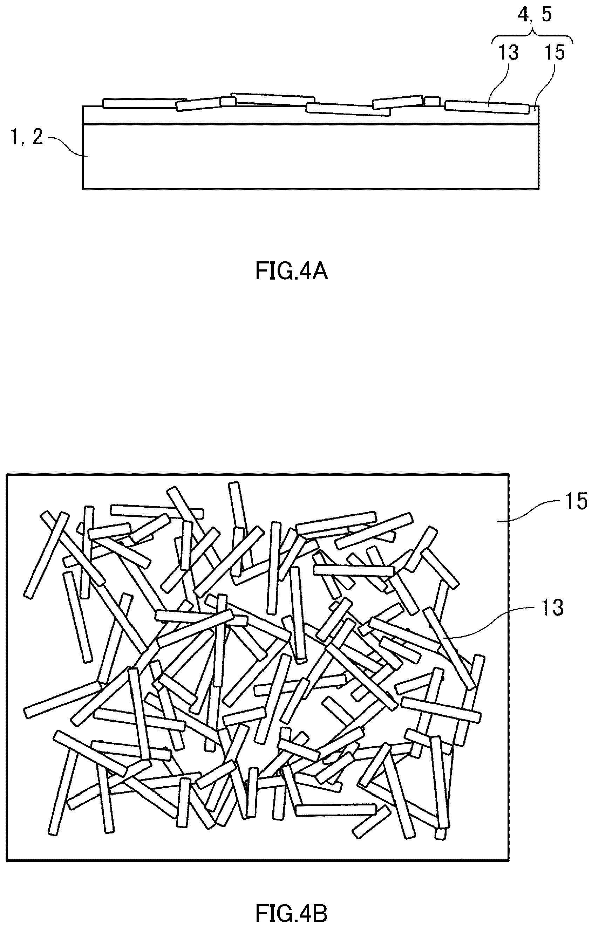

   Fig. 4A is a schematic cross-sectional view showing an example of an electrode layer according to the embodiment of the present invention, and Fig. 4B is a schematic plan view of Fig. 4A.
[Fig. 5]

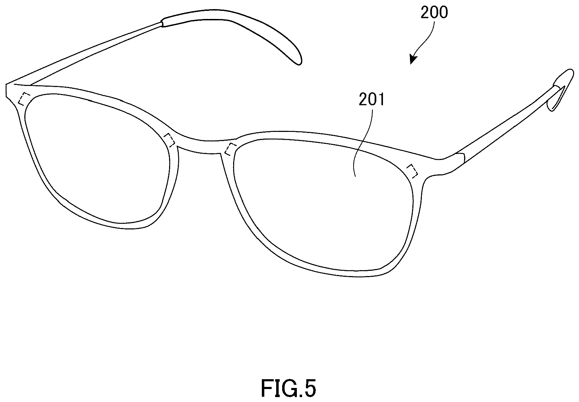

   Fig. 5 is a perspective view of spectacles using the electrochromic element according to the embodiment of the present invention.

### [Description of Embodiments]

Hereinafter, a mode for implementing the present invention (hereinafter simply referred to as "the present embodiment") will be described in detail. First, an overall structure of an electrochromic element 10 will be described.

### <Overall Structure of Electrochromic Element>

Electrochromic (EC) elements are elements that utilize an electrochromism phenomenon in which a voltage is applied to both electrodes to cause a reversible oxidation-reduction reaction and colors are reversibly changed. For example, electrochromic elements can be used as lenses for spectacles, and can function as sunglasses in bright places and clear lenses in dark places. It is possible to adjust the brightness to an optimal level by operating a switch or automatically.

Fig. 1 is a schematic cross-sectional view of the electrochromic element 10. The electrochromic element 10 includes a pair of a first substrate 1 and a second substrate 2, a first electrode layer 4 and a second electrode layer 5 which are arranged inside the substrates 1 and 2, and an electrochromic layer 6 provided between the electrode layers 4 and 5. In addition, the electrochromic layer 6 includes a reduction layer 7 arranged on the side of the first electrode layer 4, an oxidation layer 8 arranged on the side of the second electrode layer 5, and an electrolyte layer 9 provided between the reduction layer 7 and the oxidation layer 8.

As shown in Fig. 1, both ends of the first substrate 1 and the second substrate 2 extend outward from the electrochromic layer 6, and a sealing layer 14 is provided between the substrates 1 and 2 and around the electrochromic layer 6. The sealing layer 14 is an existing insulating resin material, and the substrates 1 and 2 are adhered together by the sealing layer 14.

The electrochromic element 10 is in the form of a film, and can form, for example, a lens for spectacles in which the electrochromic film shown in Fig. 1 is adhered to the surface of a lens base material (not shown). Alternatively, a lens for spectacles can be formed using the electrochromic element 10 shown in Fig. 1 with the first substrate 1 and the second substrate 2 as lens base materials.

The substrates 1 and 2 constituting the electrochromic element 10 are, for example, in the form of a film or sheet, and are required to be transparent and have high transmittance. The substrates 1 and 2 are, for example, resin substrates that can be molded such as a polycarbonate resin, an acrylic resin, an epoxy resin, and a phenolic resin, and glass substrates. If the substrates 1 and 2 are formed of a polycarbonate resin, this is advantageous because transparency and high transmittance can be obtained and in terms of production cost.

The reduction layer 7 constituting the electrochromic layer 6 is a layer that develops colors according to a reduction reaction. For the reduction layer 7, existing reduced electrochromic compounds can be used. It does not matter whether it is an organic substance or an inorganic substance, and although not limited, examples include azobenzene, anthraquinone, diarylethene, dihydroprene, dipyridine, styryl, styryl spiropyran, spirooxazine, spirothiopyran, thioindigo, tetrathiafulvalene, terephthalic acid, triphenylmethane, triphenylamine, naphthopyran, viologen, pyrazoline, phenazine, phenylenediamine, phenoxazine, phenothiazine, phthalocyanine, fluoran, fulgide, benzopyran, and metallocene substances, tungsten oxide, molybdenum oxide, iridium oxide, and titanium oxide.

The oxidation layer 8 constituting the electrochromic layer 6 is a layer that develops colors according to an oxidation reaction. For the oxidation layer 8, existing oxidized electrochromic compounds can be used. It does not matter whether it is an organic substance or an inorganic substance, and although not limited, for example, it can be selected from among a composition containing a radically polymerizable compound including triarylamine, a Prussian blue type complex, nickel oxide, iridium oxide and the like.

The electrolyte layer 9 constituting the electrochromic layer 6 has electronic insulation and ionic conductivity and is preferably transparent. The electrolyte layer 9 may be a solid electrolyte, a gel, or a liquid. In order to maintain high ionic conductivity, a gel is preferable. Although not limited, for example, existing electrolyte materials such as inorganic ion salts such as alkali metal salts and alkaline earth metal salts, quaternary ammonium salts and acids can be used.

Fig. 2 is a schematic cross-sectional view of an electrochromic element molded into a spherical shape. The electrochromic element 10 of the present embodiment can be applied to, for example, a lens for spectacles. In this case, the electrochromic element should be processed into a spherical element, but since it is difficult to produce a spherical element from the beginning, generally, a method in which the planar electrochromic element 10 shown in Fig. 1 is produced, a treatment such as pressing it into a predetermined mold while heating is then performed, and the electrochromic element 10 is molded into a spherical shape is used.

### <Problems in Conventional Electrochromic Element>

Incidentally, for the electrode layers 4 and 5 of the electrochromic element 10, in consideration of transparency, conductivity and the like, indium tin oxide (ITO) is generally used.

Conventionally, since the ITO film that has been generally applied is crystalline, cracks are likely to occur when the electrochromic element 10 is processed into a three-dimensional curved surface.

As described above, the electrochromic element 10 can be applied to, for example, a lens for spectacles, and the electrochromic element 10 is bent into a three-dimensional curved surface, but in this case, cracks may occur in the ITO film formed over almost the entire surface of the electrochromic element 10. That is, as shown in Fig. 3, when an electrochromic element in which the electrode layers 4 and 5 are made of ITO is applied to a lens 101 of spectacles 100, damage due to cracks 102 may occur on the inner surface of the lens 101. The cracks 102 may have various sizes ranging from large ones that are visible to minute microcracks that cannot be recognized unless observed under a microscope, but all of them inhibit functions of elements or become a factor that reduces long-term reliability.

### <Electrode Layer of First Embodiment>

An electrode layer according to the present embodiment will be described. First, as shown in Fig. 1, the electrode layers 4 and 5 are in contact with the substrates 1 and 2, respectively, or arranged on the surface of the substrate with a functional layer such as a reflection suppression layer therebetween.

Examples of properties required for the electrode layers 4 and 5 include transparency, high transmittance and excellent conductivity. As described above, since cracks may occur in the ITO film, it is desirable to use an electrode material that does not cause cracks even when formed from a planar shape to a spherical shape instead of ITO.

Here, the inventors conducted extensive studies and as a result, found that, when a conductive amorphous (non-crystalline) material is used as the material of the electrode layers 4 and 5, the electrode layers 4 and 5 are formed of a transparent electrode layer made of an amorphous material.

The conductive amorphous material may be either an inorganic material or an organic material, or may be a hybrid material. As the inorganic material, indium zinc oxide (IZO) can be preferably applied. In addition, although the material is not limited, as the organic material, poly(3,4-ethylenedioxythiophene)/polystyrene sulfonic acid (PEDOT/PSS), polyacetylene, polypyrrole, polyaniline, polythiophene, poly(p-phenylene), polyfluorene, poly(p-phenylene vinylene), polythienylene vinylene, polyacene, and graphene conductive polymer materials are preferably used. The above electrode materials have a certain degree of flexibility, can have a random lamination distribution, and can provide redundancy against local disconnection. Therefore, when these materials are used for the electrode layers 4 and 5 of the electrochromic element 10, it is possible to minimize the occurrence of cracks in the electrode layers 4 and 5 when the electrochromic element 10 is formed into a three-dimensional curved surface.

In the first embodiment, for the first electrode layer 4 and the second electrode layer 5, it is particularly preferable to use IZO. As a transparent electrode film material, IZO has low resistance when it is formed into a film at room temperature, high transmittance, amorphous stability and excellent surface smoothness, bending resistance, and excellent etching properties. In addition, since IZO generates few nodules and is extremely unlikely to cause arcing, particles can be minimized. Hereinafter, it will be described that an electrode using IZO has better basic properties as a transparent electrode than a conventional electrode using ITO.

### [Comparison of Properties Between ITO and IZO]

IZO has better conductive properties than ITO. For example, a case in which specific resistances (mΩ·cm) of ITO and IZO at an annealing temperature (°C) are compared will be described. In this case, regarding the specific resistance, IZO can maintain a lower specific resistance than ITO in an annealing temperature range of about 0 to 200°C. Specifically, the specific resistance of IZO is 0.5 (mΩ·cm) or less, and preferably 0.4 (mΩ·cm) or less. In this manner, IZO has a lower specific resistance and better conductive properties than ITO during film formation at room temperature or during annealing at a low temperature.

IZO has better optical properties than ITO. For example, it is known that the transmittance of IZO is higher than that of ITO in a visible light wavelength range of 400 nm to 780 nm. Specifically, the transmittance of IZO in an annealing temperature range of 0°C to 180°C is about 80% or more, preferably 83% or more, more preferably 85% or more, still more preferably 87% or more, and most preferably 90% or more. In this manner, IZO has a higher transmittance than ITO during film formation at room temperature or during annealing at a low temperature.

IZO has better bending resistance properties than ITO. For example, an IZO film and an ITO film (the base material is a transparent polyimide) are placed on a table whose tilt angle can be changed, and each film is bent while changing the tilt angle (10 to 90 degrees) of the table in a direction in which both ends of each film approach each other. It is known that IZO has a lower resistance change rate (ΔR/R₀) with respect to the number of times it is bent and better bending resistance properties than ITO. That is, it is known that cracks caused by bending are more likely to occur with ITO than IZO. The resistance change rate (ΔR/R₀) can be expressed as a ratio of the resistance change amount ΔR to the resistance value R₀ when the number of times it is bent is zero. The resistance change rate (ΔR/R₀) of IZO (without annealing) is 0.03% or less, preferably 0.02% or less, and more preferably 0.01% or less when the number of times it is bent is within 30,000. In this manner, IZO has better bending resistance properties than ITO.

As described above, IZO has lower resistance, better conductive properties, and higher transmittance than ITO. In addition, it has excellent bending resistance properties, good amorphous stability, and is less likely to cause cracks than ITO. Therefore, when IZO is used for the electrode layers 4 and 5 of the electrochromic element 10, the occurrence of cracks is minimized and defects are unlikely to occur when the electrochromic element 10 is molded into the spherical structure shown in Fig. 2 from the planar structure shown in Fig. 1.

### <Electrode Layer of Second Embodiment>

In a second embodiment, the pair of first electrode layer 4 and second electrode layer 5 are made of a large number of conductive fibers. That is, the transparent electrode layer in the second embodiment is formed of a single-layer structure of conductive fibers. Although the conductive fibers are not limited, they are submicron fibers (tubes or wires), and it is preferable to use carbon nanotubes (CNT) or metal nanowire materials. Although the metal nanowire materials are not limited, it is preferable to use silver (Ag) nanowires. In addition, it is preferable to use these materials in combination and it is particularly preferable to use carbon nanotubes (CNT) and silver (Ag) nanowires in combination. When these materials are used for the electrode layer, it is possible to provide redundancy against local disconnection and uniform power supply can be maintained over the entire surface of the element.

In the present embodiment, when conductive fibers form a mesh-like matrix, it is possible to secure the transparency of the electrode layers 4 and 5 and to secure the stability of the conductive path.

### <Electrode Layer of Third Embodiment>

An electrode layer of a third embodiment is different from the second embodiment in that a transparent electrode layer contains conductive fibers. For example, as shown in Fig. 4A and Fig. 4B, the electrode layers 4 and 5 have a configuration in which a large number of conductive fibers 13 are laminated on the surface of a transparent electrode layer 15 formed on the surface (inner surface) of the substrates 1 and 2. As shown in Fig. 4B, the conductive fibers 13 form a mesh-like matrix uniformly over the entire surface of the transparent electrode layer 15. Here, the conductive fibers 13 may be mixed into the transparent electrode layer 15.

Here, the transparent electrode layer 15 shown in Fig. 4A and Fig. 4B may be ITO, or may be the transparent electrode layer made of a conductive amorphous material in the first embodiment. For example, in the third embodiment, the transparent electrode layer 15 is made of ITO, and the conductive fibers 13 are particularly preferably made of a combination of carbon nanotubes (CNT) and silver (Ag) nanowires.

When the electrode structure shown in Fig. 4A and Fig. 4B is used, even if a disconnection occurs in the electrode layers 4 and 5, for example, the transparent electrode layer 15 is made of ITO, and even if cracks occur in the ITO film, redundancy due to the conductive fibers occurs, and by making that part conductive, uniform power supply is maintained over the entire surface of the element.

Here, the conductive fibers 13 in the third embodiment can be inserted into a first interface 11 between the first electrode layer 4 and the reduction layer 7 shown in Fig. 1 and Fig. 2 and a second interface 12 between the second electrode layer 5 and the oxidation layer 8. Therefore, since the electrode layers 4 and 5 and the electrochromic layer 6 are in contact with each other, it is possible to obtain a stable electrochromic phenomenon and maintain excellent responsiveness.

### <Applications>

Although applications of the electrochromic element of the present embodiment are not limited, it can be preferably applied to a light control lens for spectacles. In the lens for spectacles, the electrochromic element 10 processed into the three-dimensional curved surface shown in Fig. 2 is used. The electrochromic element 10 is, for example, an electrochromic film, and a lens for spectacles in which a lens base material is molded on the side of the second substrate 2 can be used.

Fig. 5 is a perspective view of spectacles 200 using the electrochromic element according to the embodiment of the present invention. In the embodiment of the present invention, when the electrochromic element is three-dimensionally formed into a spherical surface or a curved shape and used as the lens for spectacles 201, the spectacles 200 without cracks can be produced.

The electrochromic element of the present embodiment may be applied to those other than the lens for spectacles. Examples thereof include electrochromic light control devices and anti-glare mirrors.

### [Industrial Applicability]

According to the electrochromic element of the present invention and the lens for spectacles using the same, it is possible to provide redundancy against local disconnection, minimize the occurrence of cracks, and maintain uniform power supply over the entire surface of the EC element.

Priority is claimed on Japanese Patent Application No. 2021-82863, filed May 17, 2021, the content of which is incorporated herein by reference.

## Claims

1. An electrochromic element having an electrode layer and an electrochromic layer,
wherein the electrode layer is a transparent electrode layer made of an amorphous material.

2. The electrochromic element according to claim 1,
wherein the electrode layer is a transparent electrode layer containing IZO.

3. The electrochromic element according to claim 1,
wherein the electrode layer is a transparent electrode layer containing a conductive polymer material.

4. An electrochromic element having an electrode layer and an electrochromic layer,
wherein the electrode layer contains conductive fibers.

5. The electrochromic element according to claim 4,
wherein the conductive fibers are carbon nanotubes or metal nanowires.

6. The electrochromic element according to claim 4 or 5,
wherein the electrode layer is a transparent electrode layer that contains the conductive fibers.

7. The electrochromic element according to claim 1 or 4,
wherein the electrochromic element is formed into a curved shape.

8. A lens for spectacles including the electrochromic element according to claim 7.
